# EUROPÄISCHE PATENTSCHRIFT

(11) **EP 3 714 234 B1**
(45) Veröffentlichungstag und Bekanntmachung des Hinweises auf die Patenterteilung: **22.09.2021**
(21) Anmeldenummer: 18795961.4
(22) Anmeldetag: 22.10.2018
(51) Int. Cl.: G01F 1/80, G01F 1/84

(54) **VORRICHTUNG MIT EINEM DICHTELEMENT ZUM ABDICHTEN EINES SPALTS, VERFAHREN ZUM BETREIBEN EINER SOLCHEN VORRICHTUNG, MESSSYSTEM UND DOSIERSYSTEM**
DEVICE HAVING A SEALING ELEMENT FOR SEALING A GAP, METHOD FOR OPERATING SUCH A DEVICE, MEASURING SYSTEM, AND DOSING SYSTEM
DISPOSITIF POURVU D'UN ÉLÉMENT ÉTANCHE DESTINÉ À RENDRE ÉTANCHE UN ESPACE, PROCÉDÉ D'UTILISATION D'UN TEL DISPOSITIF, SYSTÈME DE MESURE ET SYSTÈME DE DOSAGE

(30) Priorität: 23.11.2017 DE 102017010852
(43) Veröffentlichungstag der Anmeldung: 30.09.2020
(73) Patentinhaber: Schenck Process Europe GmbH (HRB 89371), 64293 Darmstadt (DE)
(72) Erfinder: KAHLE, Jens, 63303 Dreieich (DE)
(86) Internationale Anmeldenummer: PCT/EP2018/078828
(87) Internationale Veröffentlichungsnummer: WO 2019/101452

(56) Entgegenhaltungen:
- EP-A1- 0 196 440
- WO-A1-2006/063774
- DE-B3- 10 253 078
- US-A- 5 088 331

## Beschreibung

Die Erfindung betrifft eine Vorrichtung, umfassend eine Welle, eine zumindest einen Teil der Welle umgebende Lagerhülse zur drehbaren Lagerung der Welle, ein Gehäuse, in dem zumindest ein Teil der Lagerhülse angeordnet ist, sowie ein einen Spalt zwischen einer Wandung des Gehäuses und der Lagerhülse abdichtendes Dichtelement, das eine Vorderseite und eine Rückseite aufweist. Ferner betrifft die Erfindung ein Verfahren zum Betreiben einer solchen Vorrichtung, ein Messsystem mit einer solchen Vorrichtung sowie ein Dosiersystem mit einer solchen Vorrichtung.

Eine Vorrichtung der eingangs genannten Art ist beispielweise aus der DE 10 2004 060 045 B4 sowie aus der DE 102 53 078 B3 bekannt. Das den Spalt zwischen der Lagerhülse und der Wandung des Gehäuses abdichtende Dichtelement dient bei der jeweiligen Vorrichtung dazu, ein Eindringen von Verunreinigungspartikeln, insbesondere von Schüttgutpartikeln, in einen an die Rückseite des Dichtelements grenzenden Innenraum des Gehäuses zu verhindern. Mithilfe des Dichtelements soll insbesondere vermieden werden, dass eine oder mehrere Komponenten der Vorrichtung, wie zum Beispiel ein im Gehäuse angeordnetes Lager und/oder ein Antriebselement, durch Verunreinigungspartikel beschädigt wird/werden.

In der DE 10 2004 060 045 B4 sowie in der DE 102 53 078 B3 ist vorgesehen, das Dichtelement in ein Wälzlager zu integrieren oder das Dichtelement als O-Ringdichtung auszubilden. Beide Varianten haben den Nachteil, dass ein Eindringen von Verunreinigungspartikeln in den Innenraum des Gehäuses nicht zuverlässig verhindert werden kann, insbesondere dann, wenn die Vorderseite des Dichtelements einem erhöhten Betriebsdruck von beispielsweise 1,5 bar (absolut) oder höher ausgesetzt wird.

Eine Aufgabe der Erfindung ist es, bei einer Vorrichtung der eingangs genannten Art zu ermöglichen, dass zumindest ein Teilinnenraum des Gehäuses zuverlässig vor dem Eindringen von Verunreinigungspartikeln geschützt werden kann.

Diese Aufgabe wird erfindungsgemäß gelöst durch eine Vorrichtung nach Anspruch 1, ein Verfahren nach Anspruch 16, ein Messsystem nach Anspruch 17 und ein Dosiersystem nach Anspruch 18.

Vorteilhafte Weiterbildungen der Erfindung sind in den weiteren Patentansprüchen sowie in der nachfolgenden Beschreibung angegeben.

Die erfindungsgemäße Vorrichtung umfasst eine Welle, eine zumindest einen Teil der Welle umgebende Lagerhülse zur drehbaren Lagerung der Welle, ein Gehäuse, in dem zumindest ein Teil der Lagerhülse angeordnet ist, sowie ein einen Spalt zwischen einer Wandung des Gehäuses und der Lagerhülse abdichtendes Dichtelement, das eine Vorderseite und eine Rückseite aufweist. Das Dichtelement unterteilt den Spalt gasdicht in einen an die Vorderseite des Dichtelements grenzenden ersten Teilraum und einen an die Rückseite des Dichtelements grenzenden zweiten Teilraum. Außerdem weist das Dichtelement einen flexiblen Teil auf, der mit der Wandung des Gehäuses und/oder mit der Lagerhülse in Kontakt ist. Das Gehäuse weist einen ersten Sperrgaseinlass zum Einleiten von Sperrgas in den ersten Teilraum sowie einen zweiten Sperrgaseinlass zum Einleiten von Sperrgas in den zweiten Teilraum auf.

Über den ersten Sperrgaseinlass kann ein unter erhöhtem Druck stehendes Sperrgas in den ersten Teilraum eingeleitet werden. Der Gasdruck des Sperrgases im ersten Teilraum kann Partikel, wie zum Beispiel Schüttgutpartikel, daran hindern, über eine Öffnung des Gehäuses in den ersten Teilraum einzudringen. Zweckmäßigerweise wird der Sperrgasdruck hierzu so eingestellt, dass der Sperrgasdruck im ersten Teilraum oberhalb des in der Umgebung des Gehäuses herrschenden Drucks liegt. Dadurch kann auch dann, wenn Partikel mit einem erhöhten Druck am Gehäuse vorbeigeführt werden, vermieden werden, dass die Partikel in den ersten Teilraum eindringen.

Ein Vorteil des flexiblen Teils des Dichtelements ist, dass sich der flexible Teil aufgrund seiner Flexibilität an den Durchmesser der Welle und/oder an die Breite des Spalts zwischen der Wandung des Gehäuses und der Lagerhülse anpassen kann.

Der flexible Teil ermöglicht es dem Dichtelement, den Spalt zwischen der Wandung des Gehäuses und der Lagerhülse staub- und gasdicht abzuschließen.

Der zweite Sperrgaseinlass kann dazu genutzt werden, das Sperrgas zusätzlich in den zweiten Teilraum einzuleiten. Auf diese Weise kann verhindert werden, dass sich der flexible Teil des Dichtelements bedingt durch einen erhöhten Sperrgasdruck im ersten Teilraum verformt. Eine solche druckbedingte Verformung des flexiblen Teils des Dichtelements kann zum Beispiel dazu führen, dass sich der flexible Teil des Dichtelements derart an die Lagerhülse anlegt, dass der flexible Teil des Dichtelements im Betrieb der Vorrichtung ein unerwünschtes Reib-/Bremsmoment auf die Lagerhülse ausübt.

Im Falle einer Unterbrechung bzw. eines Ausfalls der Sperrgaszufuhr in den ersten (und ggf. in den zweiten) Teilraum, kann mithilfe des Dichtelements ein Eindringen von Verunreinigungspartikeln aus dem ersten Teilraum in den zweiten Teilraum zuverlässig verhindert werden. Mithilfe des Dichtelements können somit insbesondere Komponenten der Vorrichtung, die im zweiten Teilraum oder in einem an den zweiten Teilraum anschließenden Innenraum des Gehäuses angeordnet sind, vor Verunreinigungen geschützt werden.

Mithilfe der beiden Sperrgaseinlässe und des Dichtelements kann die Funktionsfähigkeit der Vorrichtung auch unter widrigen Betriebsbedingungen, insbesondere bei hohen Betriebsdrücken, über einen längeren Zeitraum sichergestellt werden.

Die Lagerhülse ist vorzugsweise drehbar im Gehäuse gelagert. Dadurch wird eine Rotation der Lagerhülse relativ zu dem Gehäuse ermöglicht. Des Weiteren ermöglicht die drehbare Lagerung der Lagerhülse, die Lagerhülse und die Welle derart anzutreiben, dass die Lagerhülse und die Welle mit der gleichen oder im Wesentlichen der gleichen Winkelgeschwindigkeit rotieren. Auf diese Weise kann erreicht werden, dass bei einer Rotation der Welle zwischen der Welle und der Lagerhülse keine oder nur vernachlässigbare Reibungskräfte entstehen.

Vorteilhafterweise umfasst die Vorrichtung mindestens ein Lager zur drehbaren Lagerung der Lagerhülse im Gehäuse. Dieses Lager ist zweckmäßigerweise zwischen der Lagerhülse und der Wandung des Gehäuses angeordnet. Weiter ist es zweckmäßig, wenn dieses Lager als Radiallager ausgebildet ist. Das Lager kann beispielsweise ein Wälzlager sein.

In bevorzugter Weise ist die Lagerhülse durch das zuvor erwähnte Dichtelement hindurchgeführt.

Weiter ist es bevorzugt, wenn der flexible Teil des Dichtelements entlang einer Umfangslinie der Lagerhülse mit der Lagerhülse in Kontakt ist.

Mindestens einer der beiden Sperrgaseinlässe - zum Beispiel der zweite Sperrgaseinlass - kann ein Filterelement zum Filtern des Sperrgases umfassen. Mithilfe des Filterelements kann ein Einbringen von Verunreinigungen mit dem Sperrgas in den ersten bzw. zweiten Teilraum vermieden werden. Insbesondere können beide Sperrgaseinlässe jeweils ein Filterelement zum Filtern des Sperrgases umfassen.

Bei einer vorteilhaften Weiterbildung der Erfindung weist das Dichtelement ein Befestigungsstück und ein mit dem Befestigungsstück verbundenes Dichtstück auf. Vorzugsweise bildet das Dichtstück den flexiblen Teil des Dichtelements. Ferner ist das Befestigungsstück vorzugsweise an besagter Wandung des Gehäuses befestigt.

Das Befestigungsstück kann beispielsweise ein Metall, insbesondere Edelstahl, enthalten oder aus einem Metall bestehen. Vorzugsweise ist das Dichtstück aus einem elastisch verformbaren Material gefertigt. Zum Beispiel kann das Dichtstück ein Elastomer, insbesondere Silikon, enthalten oder aus einem Elastomer bestehen.

In bevorzugter Weise hat das Befestigungsstück eine axialsymmetrische Form. Das Dichtstück weist vorzugweise einen ersten Abschnitt sowie einen mit dem ersten Abschnitt verbundenen zweiten Abschnitt auf. Der erste Abschnitt des Dichtstücks kann zum Beispiel hohlzylindrisch ausgebildet sein. Der zweite Abschnitt des Dichtstücks kann beispielweise eine gewellte Ringform aufweisen. Des Weiteren können der erste und der zweite Abschnitt des Dichtstücks einstückig miteinander ausgebildet sein.

Zweckmäßigerweise hat das Befestigungsstück einen größeren Außendurchmesser sowie einen größeren Innendurchmesser als das Dichtstück.

Weiterhin kann das Dichtstück einen Abschnitt aufweisen, der formschlüssig in einer Nut des Befestigungsstücks angeordnet ist. Durch den Formschluss kann eine starke Verbindung zwischen dem Befestigungsstück und dem Dichtstück erreicht werden.

Das Gehäuse kann eine Öffnung aufweisen, durch welche die Welle hindurchgeführt ist. Durch diese Öffnung kann der erste Teilraum mit der Umgebung des Gehäuses verbunden sein. Vorzugsweise kann das über den ersten Sperrgaseinlass in den ersten Teilraum eingeleitete Sperrgas über diese Öffnung aus dem Gehäuse herausströmen. Bei einer vorteilhaften Erfindungsvariante umfasst die Vorrichtung einen Schwebering zum Abdichten dieser Öffnung.

In bevorzugter Weise umfasst die Vorrichtung mindestens ein zwischen der Welle und der Lagerhülse angeordnetes Lager, mittels welchem die Welle in der Lagerhülse drehbar gelagert ist. Zweckmäßigerweise ist dieses Lager als Radiallager ausgebildet. Das Lager kann beispielsweise ein Wälzlager sein.

Darüber hinaus kann die Vorrichtung ein drehbar gelagertes, beschaufeltes Messrad zum Umlenken eines Materialstroms aufweisen. Zweckmäßigerweise ist das Messrad starr mit der Welle verbunden. In bevorzugter Weise ist die Vorderseite des Dichtelements dem Messrad zugewandt.

Die Vorrichtung kann außerdem ein weiteres Dichtelement aufweisen. Vorzugsweise ist das weitere Dichtelement zwischen der Lagerhülse und der Welle angeordnet. Mithilfe des weiteren Dichtelements kann beispielsweise ein Spalt zwischen der Lagerhülse und der Welle abgedichtet werden.

Weiterhin ist es vorteilhaft, wenn die Vorrichtung an einen Kompressor angeschlossen ist, über welchen die Vorrichtung mit einem Sperrgas versorgbar ist. Vorteilhafterweise sind die beiden Sperrgaseinlässe der Vorrichtung jeweils mittels einer eigenen Gasleitung oder mittels einer gemeinsamen Gasleitung mit dem Kompressor verbunden.

In bevorzugter Weise umfasst das Gehäuse einen Sperrgaskanal, über welchen die beiden Sperrgaseinlässe miteinander verbunden sind. Vorzugsweise sind die beiden Sperrgaseinlässe über den Sperrgaskanal mit dem Sperrgas versorgbar.

Bei der Vorrichtung kann es sich um ein Messgerät zum Messen eines Massendurchsatzes eines Materialstroms, insbesondere eines Schüttgutstroms, nach dem Coriolis-Prinzip handeln. In diesem Fall weist die Vorrichtung vorteilhafterweise eine Kraftmesseinrichtung auf, welche dazu eingerichtet ist, ein vom Massendurchsatz des Materialstroms abhängiges Messsignal zu erzeugen. Die Kraftmesseinrichtung kann insbesondere einen oder mehrere Dehnungsmessstreifen umfassen. Zum Beispiel kann die Kraftmesseinrichtung als Doppelbiegebalken-Aufnehmer ausgebildet sein.

Wie eingangs erwähnt, betrifft die Erfindung ein Verfahren zum Betreiben einer Vorrichtung der erfindungsgemäßen Art.

Bei dem erfindungsgemäßen Verfahren wird über beide Sperrgaseinlässe der Vorrichtung ein Sperrgas in das Gehäuse eingeleitet, damit die Rückseite des den Spalt zwischen der Wandung des Gehäuses und der Lagerhülse abdichtenden Dichtelements mit dem gleichen oder im Wesentlichen dem gleichen Gasdruck beaufschlagt wird wie die Vorderseite des Dichtelements.

Das Verfahren beruht auf der Überlegung, dass eine etwaige Verformung des flexiblen Teils des Dichtelements, welche auf einem erhöhten Sperrgasdruck im ersten Teilraum beruht, dazu führen kann, dass sich das Dichtelement derart an die Lagerhülse anlegt, dass das Dichtelement im Betrieb der Vorrichtung ein unerwünschtes Reib-/Bremsmoment auf die Lagerhülse ausübt. Wird die Vorrichtung zum Beispiel als Messgerät zum Messen eines Massendurchsatzes eines Materialstroms genutzt, kann ein solches Reib-/Bremsmoment zu Messfehlern führen.

Um zu vermeiden, dass sich der flexible Teil des Dichtelements durch einen erhöhten Sperrgasdruck im ersten Teilraum verformt, wird das Sperrgas auch über den zweiten Sperrgaseinlass in den zweiten Teilraum eingeleitet. Auf diese Weise werden die Vorderseite und die Rückseite des Dichtelements mit dem gleichen Gasdruck beaufschlagt, sodass eine druckbedingte Verformung des Dichtelements vermieden wird.

Ferner betrifft die Erfindung, wie eingangs erwähnt, ein Messsystem. Das erfindungsgemäße Messsystem umfasst eine Vorrichtung der erfindungsgemäßen Art, wobei die Vorrichtung zum Messen eines Massendurchsatzes eines Materialstroms dient und eine Kraftmesseinrichtung der oben genannten Art aufweist. Zudem umfasst das erfindungsgemäße Messsystem eine Auswerteeinheit, die dazu eingerichtet ist, unter Verwendung des Messsignals der Kraftmesseinrichtung den Massendurchsatz des Materialstroms zu ermitteln.

Außer dem Messsignal der Kraftmesseinrichtung kann/können bei der Ermittlung des Massendurchsatzes des Materialstroms auch ein oder mehrere weitere Messsignale, wie zum Beispiel ein von der Drehzahl des Messrads abhängiges Messsignal, und/oder ein oder mehrere andere Parameter genutzt werden.

Zweckmäßigerweise ist die Auswerteeinheit des Messsystems mit einem Datenspeicher zum Speichern von Software sowie mit einem Prozessor zum Ausführen von Software ausgestattet. Im Datenspeicher der Auswerteeinheit ist vorzugsweise eine Software hinterlegt, die vom Prozessor der Auswerteeinheit ausführbar ist. Vorteilhafterweise befähigt diese Software die Auswerteeinheit dazu, unter Verwendung des Messsignals der Kraftmesseinrichtung den Massendurchsatz des Materialstroms zu ermitteln.

Darüber hinaus betrifft die Erfindung, wie eingangs erwähnt, ein Dosiersystem. Das erfindungsgemäße Dosiersystem umfasst eine Vorrichtung der erfindungsgemäßen Art, wobei die Vorrichtung zum Messen eines Massendurchsatzes eines Materialstroms dient und eine Kraftmesseinrichtung der oben genannten Art aufweist. Außerdem umfasst das erfindungsgemäße Dosiersystem eine Zufördereinheit zum Einleiten des Materialstroms in die Vorrichtung sowie eine Auswerteeinheit, die dazu eingerichtet ist, unter Verwendung des Messsignals der Kraftmesseinrichtung durch Steuern oder Regeln einer Stellgröße der Zufördereinheit einen definierten Massendurchsatz des Materialstroms einzustellen.

Stellgrößen können hierbei beispielsweise die Drehzahl eines Förderelements, Förderschnecke, Zellenrads oder Förderbands, die Frequenz und/oder Schwingstärke einer Austragsrinne oder der Öffnungswinkel eines Drehschiebers einer Zufördereinheit sein.

Die Auswerteeinheit des Dosiersystems ist zweckmäßigerweise mit einem Datenspeicher zum Speichern von Software sowie mit einem Prozessor zum Ausführen von Software ausgestattet. Vorteilhafterweise befähigt eine Software, die im Datenspeicher der Auswerteeinheit des Dosiersystems hinterlegt ist und vom Prozessor der Auswerteeinheit ausführbar ist, die Auswerteeinheit dazu, unter Verwendung des Messsignals der Kraftmesseinrichtung durch Steuern oder Regeln der Stellgröße der Zufördereinheit einen definierten Massendurchsatz des Materialstroms einzustellen.

Im Weiteren wird die Erfindung anhand von Figuren näher erläutert. Soweit zweckdienlich, sind hierbei gleiche oder gleichwirkende Elemente mit gleichen Bezugszeichen versehen. Die Erfindung ist nicht auf die in den Figuren dargestellten Ausführungen beschränkt - auch nicht in Bezug auf funktionale Merkmale. Die bisherige Beschreibung und die nachfolgende Figurenbeschreibung enthalten zahlreiche Merkmale, die in den abhängigen Patentansprüchen teilweise zu mehreren zusammengefasst wiedergegeben sind. Diese Merkmale wird der Fachmann jedoch auch einzeln betrachten und zu sinnvollen weiteren Kombinationen zusammenfügen. Insbesondere sind diese Merkmale jeweils einzeln und in beliebiger geeigneter Kombination mit der erfindungsgemäßen Vorrichtung, dem erfindungsgemäßen Verfahren, dem erfindungsgemäßen Messsystem und/oder dem erfindungsgemäßen Dosiersystem kombinierbar.

Es zeigen:
- Figur 1: ein Dosiersystem mit einer Zufördereinheit, einem Messgerät, einer Auswerteeinheit, einem Kompressor und einer Antriebseinheit in einer schematischen Darstellung;
- Figur 2: das Messgerät des Dosiersystems aus Figur 1 in einer schematischen Schnittansicht;
- Figur 3: ein Dichtelement des Messgeräts aus Figur 2 in einer perspektivischen Ansicht;
- Figur 4: das Dichtelement aus Figur 3 in einer Draufsicht;
- Figur 5: einen Schnitt durch das Dichtelement entlang der Schnittebene A-A aus Figur 4;
- Figur 6: eine weitere Ausführungsvariante eines Messgeräts für ein Dosiersystem in einer schematischen Schnittansicht.

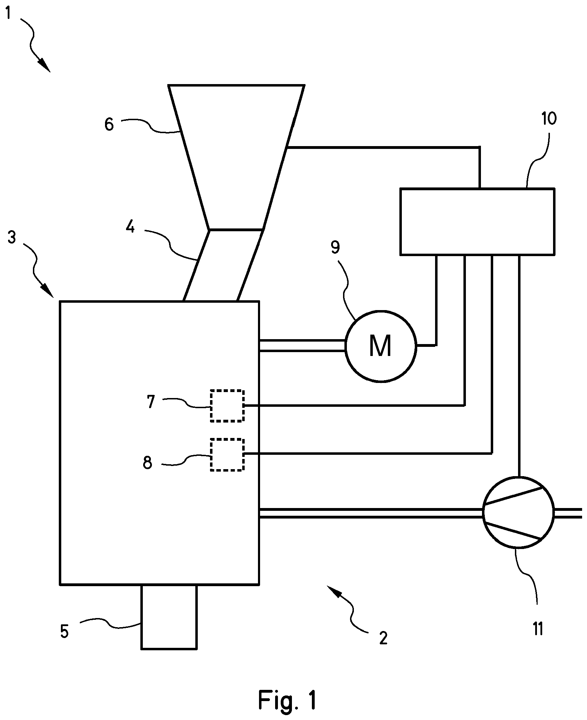

Figur 1 zeigt ein Dosiersystem 1 in einer schematischen Darstellung.

Das Dosiersystem 1 umfasst ein Messsystem 2 mit einer Vorrichtung 3 zum Messen eines Massendurchsatzes eines Materialstroms nach dem Coriolis-Prinzip. Nachfolgend wird die Vorrichtung 3 zum Messen des Massendurchsatzes eines Materialstroms der Einfachheit halber als "Messgerät" bezeichnet. Bei dem Materialstrom kann es sich insbesondere um einen Schüttgutstrom handeln. Mithilfe des Messgeräts 3 kann also insbesondere der Massendurchsatz eines Materialstroms aus rieselfähigen Schüttgutpartikeln, wie zum Beispiel Kohlenstaub, gemessen werden.

Das Messgerät 3 umfasst unter anderem einen Einlass 4 und einen Auslass 5. Der Einlass 4 des Messgeräts 3 ist an eine Zufördereinheit 6 des Dosiersystems 1 angeschlossen. Darüber hinaus ist das Messgerät 3 mit einer Kraftmesseinrichtung 7, beispielsweise einem Doppelbiegebalken-Aufnehmer, und einer Drehzahlmesseinrichtung 8 ausgestattet.

Weiterhin umfasst das Dosiersystem 1 eine Antriebseinheit 9 zum Antreiben des Messgeräts 3. Die Antriebseinheit 9 kann beispielsweise als Elektromotor ausgebildet sein.

Zusätzlich zu dem Messgerät 3 umfasst das Messsystem 2 eine Auswerteeinheit 10, die mit der Antriebseinheit 9, der Kraftmesseinrichtung 7 und der Drehzahlmesseinrichtung 8 verbunden ist.

Die Auswerteeinheit 10 ist mithilfe einer in der Auswerteeinheit 10 hinterlegten Software dazu eingerichtet, Messsignale von der Kraftmesseinrichtung 7 und der Drehzahlmesseinrichtung 8 zu verarbeiten. Darüber hinaus ist die Auswerteeinheit 10 mithilfe der in der Auswerteeinheit 10 hinterlegten Software dazu eingerichtet, eine Drehzahl der Antriebseinheit 9 sowie eine Stellgröße der Zufördereinheit 6 zu steuern, insbesondere in Abhängigkeit der Messsignale der Kraftmesseinrichtung 7 und der Drehzahlmesseinrichtung 8.

Des Weiteren ist das Dosiersystem 1 mit einem Kompressor 11 ausgestattet, welcher mit der Auswerteeinheit 10 verbunden ist und von dieser steuerbar ist. Der Kompressor 11 ist an das Messgerät 3 angeschlossen.

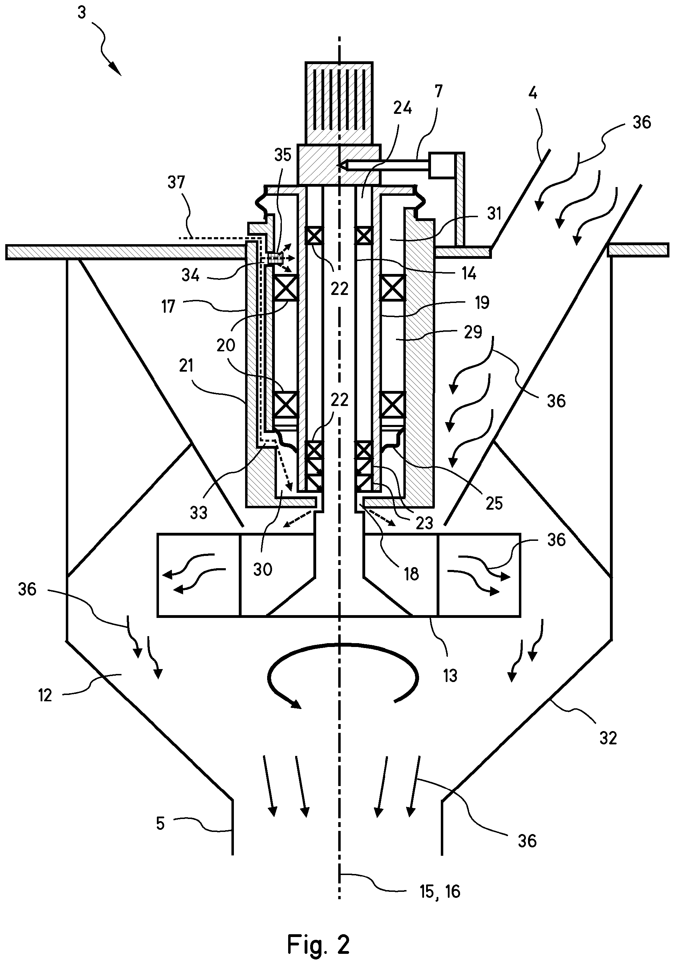

Figur 2 zeigt das Messgerät 3 aus Figur 1 in einer schematischen Schnittansicht.

Das Messgerät 3 umfasst ein erstes Gehäuse 32 zum Führen eines Materialstroms. Dieses Gehäuse 32 weist den zuvor erwähnten Einlass 4 und den zuvor erwähnten Auslass 5 auf (vgl. Figur 1). Zudem weist das erste Gehäuse 32 einen Messradraum 12 auf, in welchem ein rotierbar gelagertes, beschaufeltes Messrad 13 des Messgeräts 3 angeordnet ist.

Ferner umfasst das Messgerät 3 eine starr mit dem Messrad 13 verbundene Welle 14 zum Antreiben des Messrads 13, welche mithilfe der Antriebseinheit 9 des Dosiersystems 1 (vgl. Figur 1) antreibbar ist. Die Welle 14 weist eine Symmetrieachse 15 auf, die zugleich die gemeinsame Rotationsachse 16 der Welle 14 und des Messrads 13 ist.

Des Weiteren weist das Messgerät 3 ein zweites Gehäuse 17 auf. Dieses Gehäuse 17 ist teilweise innerhalb des ersten Gehäuses 32 angeordnet und weist eine Öffnung 18 auf, durch welche die Welle 14 geführt ist.

Außerdem weist das Messgerät 3 eine axialsymmetrische Lagerhülse 19 zur drehbaren Lagerung der Welle 14 auf, welche einen Teil der Welle 14 umgibt und die zum Teil innerhalb des zweiten Gehäuses 17 angeordnet ist.

Im vorliegenden Ausführungsbeispiel weist das Messgerät 3 zwei als radiale Wälzlager ausgebildete Lager 20 auf, die zwischen einer die Lagerhülse 19 umgebenden hohlzylindrisch ausgebildeten Wandung 21 des zweiten Gehäuses 17 und der Lagerhülse 19 angeordnet sind. Mittels dieser beiden Lager 20 ist die Lagerhülse 19 drehbar im zweiten Gehäuse 17 gelagert.

Außerdem weist das Messgerät 3 im vorliegenden Ausführungsbeispiel zwei weitere als radiale Wälzlager ausgebildete Lager 22 auf, die zwischen der Lagerhülse 19 und der Welle 14 angeordnet sind. Mittels dieser beiden Lager 22 ist die Welle 14 drehbar in der Lagerhülse 19 gelagert.

Des Weiteren umfasst das Messgerät 3 zwei Dichtelemente 23, die zwischen der Welle 14 und der Lagerhülse 19 angeordnet sind und einen Spalt 24 zwischen der Welle 14 und der Lagerhülse 19 staub- und gasdicht abdichten.

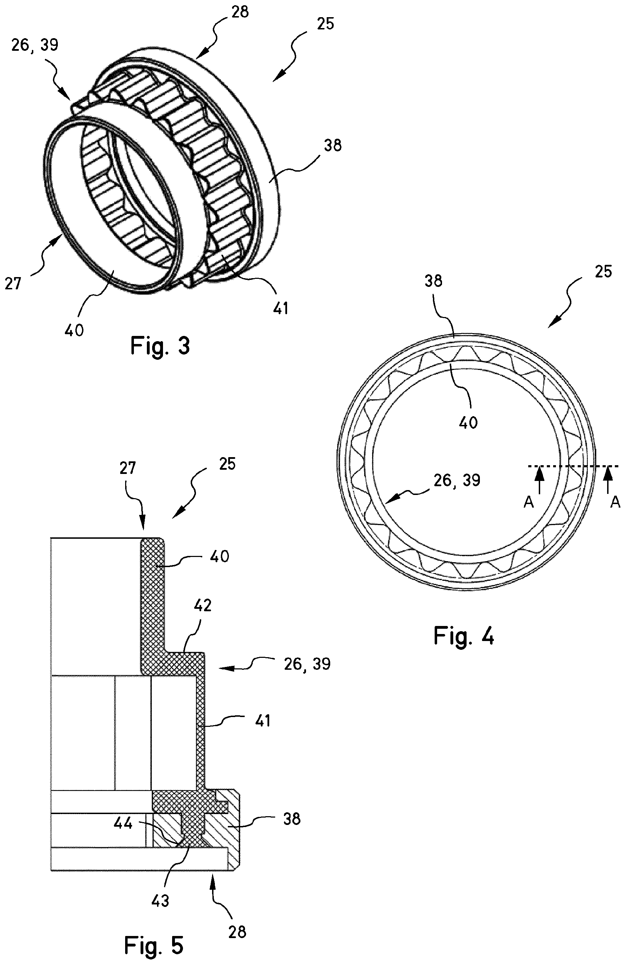

Darüber hinaus weist das Messgerät 3 ein weiteres Dichtelement 25 auf, welches am zweiten Gehäuse 17 befestigt ist und einen flexiblen Teil 26 aufweist (vgl. beispielsweise Figur 3), der entlang einer Umfangslinie der Lagerhülse 19 mit der Lagerhülse 19 in Kontakt ist. Dieses Dichtelement 25 weist eine Vorderseite 27 sowie eine Rückseite 28 auf (vgl. beispielsweise Figur 5) und unterteilt einen Spalt 29 zwischen der Lagerhülse 19 und der die Lagerhülse 19 umgebenden Wandung 21 des zweiten Gehäuses 17 gas- und staubdicht in einen an die Vorderseite 27 des Dichtelements 25 grenzenden ersten Teilraum 30 und einen an die Rückseite 28 des Dichtelements 25 grenzenden zweiten Teilraum 31. Mithilfe dieses Dichtelements 25 wird der Spalt 29 zwischen der Lagerhülse 19 und der die Lagerhülse 19 umgebenden Wandung 21 abgedichtet.

Das zweite Gehäuse 17 umfasst einen ersten Sperrgaseinlass 33, über welchen ein Sperrgas in den ersten Teilraum 30 eingeleitet werden kann, sowie einen zweiten Sperrgaseinlass 34, über welchen ein Sperrgas in den zweiten Teilraum 31 eingeleitet werden kann. Die beiden Sperrgaseinlässe 33, 34 sind über eine figürlich nicht dargestellte Gasleitung mit dem Kompressor 11 aus Figur 1 verbunden. Im vorliegenden Ausführungsbeispiel weist der zweite Sperrgaseinlass 34 ein optionales Filterelement 35 zum Filtern von Sperrgas auf.

Im Betrieb des Dosiersystems 1 aus Figur 1 wird das Messrad 13 des Messgeräts 3 mithilfe der Antriebseinheit 9 - beispielsweise über einen figürlich nicht dargestellten Riemen - derart angetrieben, dass das Messrad 13 mit konstanter Drehzahl rotiert.

Wird mithilfe der Zufördereinheit 6 ein Materialstrom 36, beispielsweise ein Schüttgutstrom, in den Einlass 4 des Messgeräts 3 eingebracht, so wird der Materialstrom 36 vom ersten Gehäuse 32 zum Messrad 13 geleitet.

Der Materialstrom 36 trifft von oben auf das Messrad 13 und wird durch dieses radial nach außen umgelenkt. Aufgrund des Coriolis-Prinzips wirkt dabei auf das Messrad 13 und die Welle 14 ein Bremsmoment, das proportional zum Massendurchsatz des Massenstroms 36 ist. Der vom Messrad 13 umgelenkte Massenstrom 36 wird vom ersten Gehäuse 32 zu dessen Auslass 5 geführt, von wo aus der Materialstrom 36 das erste Gehäuse 32 verlässt.

Das nach dem Coriolis-Prinzip auf die Welle 14 wirkende Bremsmoment wird mithilfe der Kraftmesseinrichtung 7 erfasst, wobei die Kraftmesseinrichtung 7 ein vom Bremsmoment und damit auch vom Massendurchsatz des Massenstroms 36 abhängiges Messsignal erzeugt und das Messsignal an die Auswerteeinheit 10 übermittelt.

Von der (in Figur 2 nicht dargestellten) Drehzahlmesseinrichtung 8 wird ein von der Drehzahl des Messrads 13 abhängiges Messsignal erzeugt und dieses Messsignal an die Auswerteeinheit 10 übermittelt.

Anhand der Messsignale, die die Auswerteeinheit 10 von der Kraftmesseinrichtung 7 und der Drehzahlmesseinrichtung 8 erhält, ermittelt die Auswerteeinheit 10 den Massendurchsatz des Materialstroms 36.

Um einen definierten, von einem Benutzer vorgebbaren Massendurchsatz des Materialstroms 36 zu erhalten, wird von der Auswerteeinheit 10 eine Stellgröße der Zufördereinheit 6 aus Figur 1 auf einen passenden Wert eingestellt.

Mithilfe des Kompressors 11 aus Figur 1 wird das Messgerät 3 mit einem Sperrgas 37 versorgt. Über den ersten Sperrgaseinlass 33 wird das Sperrgas 37 mit einem erhöhten Druck, beispielsweise mit einem Druck von 2 bar, in den ersten Teilraum 30 eingeleitet. Als Sperrgas 37 kann zum Beispiel Luft genutzt werden.

Das in den ersten Teilraum 30 eingeleitete Sperrgas 37 strömt über die Öffnung 18 des zweiten Gehäuses 17, durch welche die Welle 14 hindurchgeführt ist, aus dem ersten Teilraum 30 in Richtung des Messrads 13 aus dem zweiten Gehäuse 17 heraus. Auf diese Weise wird ein Eindringen von Partikeln, insbesondere von Schüttgutpartikeln, in das zweite Gehäuse 17 verhindert oder zumindest reduziert. Das Sperrgas 37 erzeugt dabei keine oder nur vernachlässigbare Reibungskräfte an der Welle 14.

Der Druck des Sperrgases 37 kann in Abhängigkeit des im Messradraum 12 vorherrschenden Drucks eingestellt werden. Zweckmäßigerweise wird der Druck des Sperrgases 37 so eingestellt, dass er oberhalb des Drucks im Messradraum 12 liegt.

Dadurch kann auch im Falle einer druckbehafteten Förderung des Materialstroms 36 das Eindringen von (Schüttgut-)Partikeln in das zweite Gehäuse 17 vermieden werden.

Eine etwaige Verformung des den Spalt 29 zwischen dem zweiten Gehäuse 17 und der Lagerhülse 19 abdichtenden Dichtelements 25, welche auf dem erhöhten Sperrgasdruck im ersten Teilraum 30 beruht, kann dazu führen, dass sich das Dichtelement 25 derart an die Lagerhülse 19 anlegt, dass das Dichtelement 25 im Betrieb des Messgeräts 3 ein unerwünschtes Reib-/Bremsmoment auf die Lagerhülse 19 ausübt, welches zu Messfehlern führt.

Um zu vermeiden, dass sich der flexible Teil 26 des Dichtelements 25 durch den erhöhten Sperrgasdruck im ersten Teilraum 30 verformt, wird das Sperrgas 37 auch über den zweiten Sperrgaseinlass 34 in den zweiten Teilraum 31 eingeleitet. Auf diese Weise werden die Vorderseite 27 und die Rückseite 28 des Dichtelements 25 mit dem gleichen Sperrgasdruck beaufschlagt, sodass eine druckbedingte Verformung des flexiblen Teils 26 des Dichtelements 25 vermieden wird.

Mithilfe des den Spalt 29 zwischen dem zweiten Gehäuse 17 und der Lagerhülse 19 abdichtenden Dichtelements 25 kann verhindert werden, dass im Falle einer Unterbrechung bzw. eines Ausfalls der Sperrgaszufuhr (Schüttgut-)Partikel in besagten Spalt 29 eindringen. Das Dichtelement 25 dient somit insbesondere dem Schutz der beiden im Spalt 29 zwischen dem zweiten Gehäuse 17 und der Lagerhülse 19 angeordneten Lager 20.

Figur 3 zeigt das Dichtelement 25, das bei dem Messgerät 3 aus Figur 2 den Spalt 29 zwischen dem zweiten Gehäuse 17 und der Lagerhülse 19 abdichtet, in einer perspektivischen Ansicht. Im vorliegenden Ausführungsbeispiel ist das Dichtelement 25 als Dichtmanschette ausgebildet.

Das Dichtelement 25 umfasst ein Befestigungsstück 38 aus Metall, insbesondere aus Edelstahl. Ferner umfasst das Dichtelement 25 ein mit dem Befestigungsstück 38 verbundenes Dichtstück 39 aus Silikon, wobei das Dichtstück 39 den zuvor erwähnten flexiblen Teil 26 des Dichtelements 25 bildet.

Das Dichtstück 39 des Dichtelements 25 umfasst einen ersten Abschnitt 40, welcher hohlzylindrisch ausgebildet ist, sowie einen zweiten Abschnitt 41, der eine gewellte Ringform aufweist. Diese beiden Abschnitte 40, 41 des Dichtelements 25 sind einstückig miteinander ausgebildet.

Figur 4 zeigt das Dichtelement 25 aus Figur 3 in einer Draufsicht, wobei dem Betrachter die Vorderseite 27 des Dichtelements 25 zugewandt ist.

In Figur 4 ist außerdem eine Schnittebene A-A eingezeichnet, auf welche sich die Schnittdarstellung auf Figur 5 bezieht.

Wie insbesondere aus Figur 4 ersichtlich ist, weist das Befestigungsstück 38 einen größeren Außendurchmesser als der erste Abschnitt 40 des Dichtstücks 39 auf. Darüber hinaus weist das Befestigungsstück 38 einen größeren Innendurchmesser als der erste Abschnitt 40 des Dichtstücks 39 auf (vgl. Figur 5).

Figur 5 zeigt einen Schnitt durch das Dichtelement 25 entlang der Schnittebene A-A aus Figur 4.

Wie aus Figur 5 ersichtlich ist, weist der zweite Abschnitt 41 des Dichtstücks 39 einen gestuften Übergang 42 auf, mit welchem der zweite Abschnitt 41 an den ersten Abschnitt 40 des Dichtstücks 39 anschließt.

Außer den beiden zuvor erwähnten Abschnitten 40, 41 weist das Dichtstück 39 einen dritten Abschnitt 43 auf, der einstückig mit den beiden erstgenannten Abschnitten 40, 41 ausgebildet ist.

Das Dichtstück 39 ist über seinen dritten Abschnitt 43, der formschlüssig in einer Nut 44 des Befestigungsstücks 38 angeordnet ist, mit dem Befestigungsstück 38 verbunden.

Bei dem Messgerät 3 aus Figur 2 ist die Lagerhülse 19 durch das Dichtelement 25 hindurchgeführt, wobei das Dichtstück 39 des Dichtelements 25 mit seinem ersten Abschnitt 40 an einer Umfangslinie der Lagerhülse 19 mit der Lagerhülse 19 in Kontakt ist.

Zudem ist bei dem Messgerät 3 aus Figur 2 das Befestigungsstück 38 des Dichtelements 25 am zweiten Gehäuse 17 befestigt, wobei das Dichtelement 25 so angeordnet ist, dass das Dichtstück 39, insbesondere dessen erster Abschnitt 40, und das Befestigungsstück 38 eine Axialsymmetrie bezüglich der Symmetrieachse 15 der Welle 14 aufweisen und die Vorderseite 27 des Dichtelements 25 dem Messrad 13 zugewandt ist.

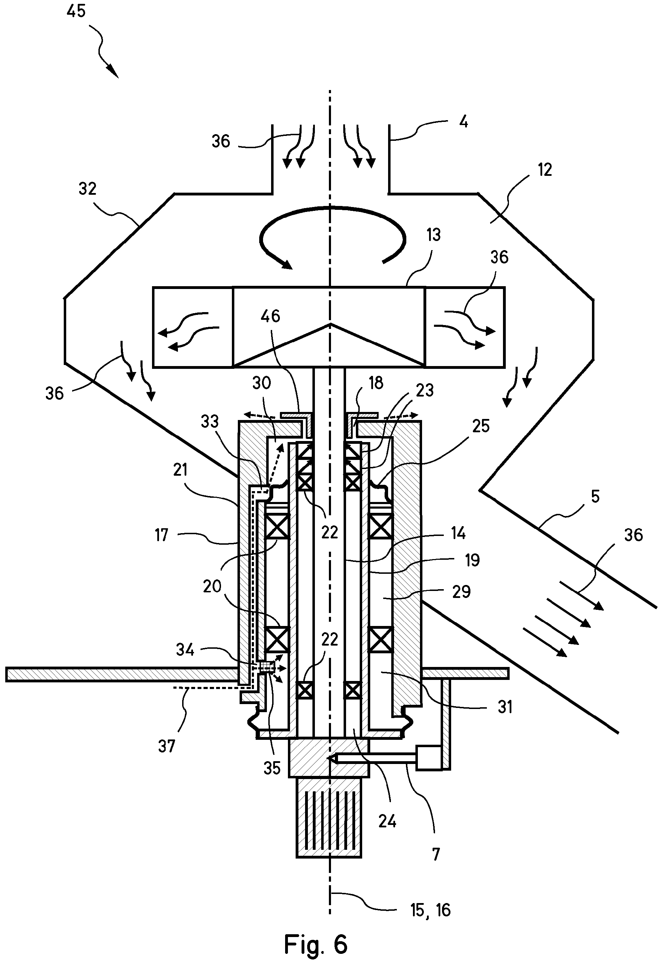

Figur 6 zeigt in einer schematischen Schnittansicht eine weitere Ausführungsvariante einer Vorrichtung 45 zum Messen eines Massendurchsatzes eines Materialstroms, insbesondere eines Schüttgutstroms, nach dem Coriolis-Prinzip. Nachfolgend wird diese Vorrichtung der Einfachheit halber als Messgerät 45 bezeichnet.

Das Messgerät 45 aus Figur 6 kann beispielsweise anstelle des Messgeräts 3 aus Figur 2 in dem Dosiersystem 1 aus Figur 1 eingesetzt werden.

Die nachfolgenden Ausführungen zu dem Messgerät 45 aus Figur 6 beziehen sich primär auf die Unterschiede zu dem Messgerät 3 aus Figur 2, auf das bezüglich gleicher Merkmale und Funktionen verwiesen wird.

Bei dem Messgerät 45 aus Figur 6 ist das Messrad 13 oberhalb des zweiten Gehäuses 17 angeordnet. Darüber hinaus umfasst das Messgerät 45 einen Schwebering 46, durch welchen die Welle 14 des Messgeräts 45 hindurchgeführt ist.

Der Schwebering 46 dient zum Abdichten der im Messradraum 12 angeordneten Öffnung 18 des zweiten Gehäuses 17, durch welche die Welle 14 hindurchgeführt ist, insbesondere im Falle einer Unterbrechung bzw. eines Ausfalls der Sperrgaszufuhr.

Liegt die Druckdifferenz aus dem Druck im ersten Teilraum 30 und dem Druck im Messradraum 12 oberhalb eines vorgegebenen Druckwerts, kann das Sperrgas 37 über besagte Öffnung 18 aus dem ersten Teilraum 30 austreten. Dabei wird der Schwebering 46 durch das austretende Sperrgas "in der Schwebe" gehalten. Durch das austretende Sperrgas 37 wird ein Eindringen von (Schüttgut-)Partikeln in den Spalt 29 zwischen der Lagerhülse 19 und der die Lagerhülse 19 umgebenden Wandung 21 des zweiten Gehäuses 17 verhindert oder zumindest reduziert.

Unterschreitet die Druckdifferenz aus dem Druck im ersten Teilraum 30 und dem Druck im Messradraum 12 den vorgegebenen Druckwert (zum Beispiel aufgrund einer Unterbrechung bzw. eines Ausfalls der Sperrgaszufuhr), verschließt der Schwebering 46 besagte Öffnung 18 des zweiten Gehäuses 17 automatisch und verhindert dadurch ein Eindringen von (Schüttgut-)Partikeln in den Spalt 29 zwischen der Lagerhülse 19 und der die Lagerhülse 19 umgebenden Wandung 21 des zweiten Gehäuses 17.

Bei der vorliegenden Ausführungsvariante des Messgeräts 45 ist das Dichtelement 25, welches den Spalt 29 zwischen der Lagerhülse 19 und der die Lagerhülse 19 umgebenden Wandung 21 des zweiten Gehäuses 17 abdichtet, wie in den Figuren 3 bis 5 dargestellt ausgebildet.

Die Erfindung wurde anhand der dargestellten Ausführungsbeispiele detailliert beschrieben. Dennoch ist die Erfindung nicht auf oder durch die offenbarten Beispiele beschränkt. Andere Varianten können vom Fachmann aus diesen Ausführungsbeispielen abgeleitet werden, ohne von den der Erfindung zugrunde liegenden Gedanken abzuweichen.

### Bezugszeichenliste

- 1: Dosiersystem
- 2: Messsystem
- 3: Vorrichtung zum Messen eines Massendurchsatzes / Messgerät
- 4: Einlass
- 5: Auslass
- 6: Zufördereinheit
- 7: Kraftmesseinrichtung
- 8: Drehzahlmesseinrichtung
- 9: Antriebseinheit
- 10: Auswerteeinheit
- 11: Kompressor
- 12: Messradraum
- 13: Messrad
- 14: Welle
- 15: Symmetrieachse
- 16: Rotationsachse
- 17: Gehäuse
- 18: Öffnung
- 19: Lagerhülse
- 20: Lager
- 21: Wandung
- 22: Lager
- 23: Dichtelement
- 24: Spalt
- 25: Dichtelement
- 26: flexibler Teil
- 27: Vorderseite
- 28: Rückseite
- 29: Spalt
- 30: Teilraum
- 31: Teilraum
- 32: Gehäuse
- 33: Sperrgaseinlass
- 34: Sperrgaseinlass
- 35: Filterelement
- 36: Materialstrom
- 37: Sperrgas
- 38: Befestigungsstück
- 39: Dichtstück
- 40: Abschnitt
- 41: Abschnitt
- 42: Übergang
- 43: Abschnitt
- 44: Nut
- 45: Vorrichtung zum Messen eines Massendurchsatzes / Messgerät
- 46: Schwebering

## Patentansprüche

1. Vorrichtung (3, 45), umfassend eine Welle (14), eine zumindest einen Teil der Welle (14) umgebende Lagerhülse (19) zur drehbaren Lagerung der Welle (14), ein Gehäuse (17), in dem zumindest ein Teil der Lagerhülse (19) angeordnet ist, sowie ein einen Spalt (29) zwischen einer Wandung (21) des Gehäuses (17) und der Lagerhülse (19) abdichtendes Dichtelement (25), das eine Vorderseite (27) und eine Rückseite (28) aufweist,
**dadurch gekennzeichnet,**
**dass** das Dichtelement (25) den Spalt (29) in einen an die Vorderseite (27) des Dichtelements (25) grenzenden ersten Teilraum (30) und einen an die Rückseite (28) des Dichtelements (25) grenzenden zweiten Teilraum (31) gasdicht unterteilt, das Dichtelement (25) einen flexiblen Teil (26) aufweist, der mit der Wandung (21) des Gehäuses (17) und/oder mit der Lagerhülse (19) in Kontakt ist, und das Gehäuse (17) einen ersten Sperrgaseinlass (33) zum Einleiten von Sperrgas (37) in den ersten Teilraum (30) sowie einen zweiten Sperrgaseinlass (34) zum Einleiten von Sperrgas (37) in den zweiten Teilraum (31) aufweist.

2. Vorrichtung (3, 45) nach Anspruch 1,
**gekennzeichnet durch**
mindestens ein Lager (20) zur drehbaren Lagerung der Lagerhülse (19) im Gehäuse (17), welches zwischen der Lagerhülse (19) und der Wandung (21) des Gehäuses (17) angeordnet ist.

3. Vorrichtung (3, 45) nach Anspruch 1 oder 2,
**dadurch gekennzeichnet,**
**dass** die Lagerhülse (19) durch das Dichtelement (25) hindurchgeführt ist.

4. Vorrichtung (3, 45) nach einem der voranstehenden Ansprüche,
**dadurch gekennzeichnet,**
**dass** der flexible Teil (26) des Dichtelements (25) entlang einer Umfangslinie der Lagerhülse (19) mit der Lagerhülse (19) in Kontakt ist.

5. Vorrichtung (3, 45) nach einem der voranstehenden Ansprüche,
**dadurch gekennzeichnet,**
**dass** mindestens einer der beiden Sperrgaseinlässe (33, 34) ein Filterelement (35) zum Filtern des Sperrgases (37) umfasst.

6. Vorrichtung (3, 45) nach einem der voranstehenden Ansprüche,
**dadurch gekennzeichnet,**
**dass** das Dichtelement (25) ein Befestigungsstück (38) und ein mit dem Befestigungsstück (38) verbundenes Dichtstück (39) aufweist, wobei das Dichtstück (39) den flexiblen Teil (26) des Dichtelements (25) bildet und das Befestigungsstück (38) an der Wandung (21) des Gehäuses (17) befestigt ist.

7. Vorrichtung (3, 45) nach Anspruch 6,
**dadurch gekennzeichnet,**
**dass** das Befestigungsstück (38) ein Metall, insbesondere Edelstahl, enthält und das Dichtstück (39) ein Elastomer, insbesondere Silikon, enthält.

8. Vorrichtung (3, 45) nach Anspruch 6 oder 7,
**dadurch gekennzeichnet,**
**dass** das Befestigungsstück (38) eine axialsymmetrische Form aufweist und das Dichtstück (39) einen ersten Abschnitt (40) sowie einen mit dem ersten Abschnitt (40) verbundenen zweiten Abschnitt (41) aufweist, wobei der erste Abschnitt (40) hohlzylindrisch ausgebildet ist und der zweite Abschnitt (41) eine gewellte Ringform aufweist und wobei der erste und der zweite Abschnitt (40, 41) des Dichtstücks (39) insbesondere einstückig miteinander ausgebildet sind.

9. Vorrichtung (3, 45) nach einem der Ansprüche 6 bis 8,
**dadurch gekennzeichnet,**
**dass** das Befestigungsstück (38) einen größeren Außendurchmesser sowie einen größeren Innendurchmesser als das Dichtstück (39) aufweist.

10. Vorrichtung (3, 45) nach einem der Ansprüche 6 bis 9,
**dadurch gekennzeichnet,**
**dass** das Dichtstück (39) einen Abschnitt (43) aufweist, der formschlüssig in einer Nut (44) des Befestigungsstücks (38) angeordnet ist.

11. Vorrichtung (45) nach einem der voranstehenden Ansprüche,
**gekennzeichnet durch**
einen Schwebering (46) zum Abdichten einer Öffnung (18) des Gehäuses (17), durch welche die Welle (14) hindurchgeführt ist, wobei die Welle (14) durch den Schwebering (46) hindurchgeführt ist.

12. Vorrichtung (3, 45) nach einem der voranstehenden Ansprüche,
**gekennzeichnet durch**
mindestens ein zwischen der Welle (14) und der Lagerhülse (19) angeordnetes Lager (22), mittels welchem die Welle (14) in der Lagerhülse (19) drehbar gelagert ist.

13. Vorrichtung (3, 45) nach einem der voranstehenden Ansprüche,
**gekennzeichnet durch**
ein drehbar gelagertes, beschaufeltes Messrad (13) zum Umlenken eines Materialstroms (36), welches starr mit der Welle (14) verbunden ist, wobei die Vorderseite (27) des Dichtelements (25) dem Messrad (13) zugewandt ist.

14. Vorrichtung (3, 45) nach einem der voranstehenden Ansprüche,
**gekennzeichnet durch**
mindestens ein weiteres Dichtelement (23), welches einen Spalt (24) zwischen der Lagerhülse (19) und der Welle (14) abdichtet.

15. Vorrichtung (3, 45) nach einem der voranstehenden Ansprüche,
wobei die Vorrichtung (3, 45) ein Messgerät zum Messen eines Massendurchsatzes eines Materialstroms (36), insbesondere eines Schüttgutstroms, nach dem Coriolis-Prinzip ist und die Vorrichtung (3, 45) eine Kraftmesseinrichtung (7) aufweist, welche dazu eingerichtet ist, ein vom Massendurchsatz des Materialstroms (36) abhängiges Messsignal zu erzeugen.

16. Verfahren zum Betreiben einer Vorrichtung (3, 45) nach einem der voranstehenden Ansprüche, bei dem über beide Sperrgaseinlässe (33, 34) ein Sperrgas (37) in das Gehäuse (17) eingeleitet wird, damit die Rückseite (28) des den Spalt (29) zwischen der Wandung (21) des Gehäuses (17) und der Lagerhülse (19) abdichtenden Dichtelements (25) mit dem gleichen oder im Wesentlichen dem gleichen Gasdruck beaufschlagt wird wie die Vorderseite (27) des Dichtelements (25).

17. Messsystem (2), umfassend eine Vorrichtung (3, 45) nach Anspruch 15 sowie eine Auswerteeinheit (10), die dazu eingerichtet ist, unter Verwendung des Messsignals der Kraftmesseinrichtung (7) den Massendurchsatz des Materialstroms (36) zu ermitteln.

18. Dosiersystem (1), umfassend eine Vorrichtung (3, 45) nach Anspruch 15, eine Zufördereinheit (6) zum Einleiten des Materialstroms (36) in die Vorrichtung (3, 45) sowie eine Auswerteeinheit (10), die dazu eingerichtet ist, unter Verwendung des Messsignals der Kraftmesseinrichtung (7) durch Steuern oder Regeln einer Stellgröße der Zufördereinheit (6) einen definierten Massendurchsatz des Materialstroms (36) einzustellen.

## Claims

1. An apparatus (3, 45), comprising a shaft (14), a bearing sleeve (19) surrounding at least one part of the shaft (14) for rotatably supporting the shaft (14), a housing (17), in which at least one part of the bearing sleeve (19) is arranged, and a sealing element (25), which seals a gap (29) between a wall (21) of the housing (17) and the bearing sleeve (19) and which has a front side (27) and a back side (28),
**characterized in that** the sealing element (25) divides the gap (29) gas-tight into a first partial space (30) adjacent to the front side (27) of the sealing element (25) and a second partial space (31) adjacent to the back side (28) of the sealing element (25), the sealing element (25) having a flexible part (26), which is in contact with the wall (21) of the housing (17) and/or with the bearing sleeve (19), and the housing (17) having a first barrier gas inlet (33) for introducing barrier gas (37) into the first partial space (30) as well as a second barrier gas inlet (34) for introducing barrier gas (37) into the second partial space (31).

2. The apparatus (3, 45) according to Claim 1,
**characterized by** at least one bearing (20) for rotatably supporting the bearing sleeve (19) in the housing (17), which is arranged between the bearing sleeve (19) and the wall (21) of the housing (17).

3. The apparatus (3, 45) according to Claim 1 or 2,
**characterized in that** the bearing sleeve (19) is inserted through the sealing element (25).

4. The apparatus (3, 45) according to one of the preceding claims,
**characterized in that** the flexible part (26) of the sealing element (25) is in contact with the bearing sleeve (19) along a circumferential line of the bearing sleeve (19).

5. The apparatus (3, 45) according to one of the preceding claims,
**characterized in that** at least one of the two barrier gas inlets (33, 34) comprises a filter element (35) for filtering the barrier gas (37).

6. The apparatus (3, 45) according to one of the preceding claims,
**characterized in that** the sealing element (25) includes a fastening piece (38) and a sealing piece (39) connected to the fastening piece (38), the sealing piece (39) forming the flexible part (26) of the sealing element (25), and the fastening piece (38) being fastened to the wall (21) of the housing (17).

7. The apparatus (3, 45) according to Claim 6,
**characterized in that** the fastening piece (38) contains a metal, in particular high-grade steel, and the sealing piece (39) contains an elastomer, in particular silicone.

8. The apparatus (3, 45) according to Claim 6 or 7,
**characterized in that** the fastening piece (38) has an axially symmetrical shape, and the sealing piece (39) has a first section (40) as well as a second section (41) connected to the first section (40), the first section (40) being provided with a hollow cylindrical design, and the second section (41) having a corrugated ring shape, and the first and second sections (40, 41) of the sealing piece (39) being designed, in particular, to form a single piece with each other.

9. The apparatus (3, 45) according to one of Claims 6 through 8,
**characterized in that** the fastening piece (38) has a larger outer diameter as well as a larger inner diameter than the sealing piece (39).

10. The apparatus (3, 45) according to one of Claims 6 through 9,
**characterized in that** the sealing piece (39) has a section (43) which is disposed in a groove (44) of the fastening piece (38) in a form-fitting manner.

11. The apparatus (45) according to one of the preceding claims,
**characterized by** a floating ring (46) for sealing an opening (18) of the housing (17), through which the shaft (14) is inserted, the shaft (14) being inserted through the floating ring (46).

12. The apparatus (3, 45) according to one of the preceding claims,
**characterized by** at least one bearing (22) arranged between the shaft (14) and the bearing sleeve (19), with the aid of which the shaft (14) is rotatably supported in the bearing sleeve (19).

13. The apparatus (3, 45) according to one of the preceding claims,
**characterized by** a rotatably supported, bladed measuring wheel (13) for deflecting a material flow (36), which is rigidly connected to the shaft (14), the front side (27) of the sealing element (25) facing the measuring wheel (13).

14. The apparatus (3, 45) according to one of the preceding claims,
**characterized by** at least one additional sealing element (23), which seals a gap (24) between the bearing sleeve (19) and the shaft (14).

15. The apparatus (3, 45) according to one of the preceding claims,
wherein the apparatus (3, 45) is a measuring instrument for measuring a mass flow rate of a material flow (36), in particular a bulk material flow, according to the Coriolis principle, and the apparatus (3, 45) includes a force measuring device (7), which is configured to generate a measuring signal dependent on the mass flow rate of the material flow (36).

16. A method for operating an apparatus (3, 45) according to one of the preceding claims, in which a barrier gas (37) is introduced into the housing (17) via the two barrier gas inlets (33, 34), so that the same or essentially the same gas pressure is applied to the back side (28) of the sealing element (25), which seals the gap (29) between the wall (21) of the housing (17) and the bearing sleeve (19), as is applied to the front side (27) of the sealing element (25).

17. A measuring system (2), comprising an apparatus (3, 45) according to Claim 15, as well as an evaluation unit (10), which is configured to ascertain the mass flow rate of the material flow (36), using the measuring signal of the force measuring device (7).

18. A dosing system (1), comprising an apparatus (3, 45) according to Claim 15, a feed unit (6) for introducing the material flow (36) into the apparatus (3, 45), as well as an evaluation unit (10), which is configured to set a defined mass flow rate of the material flow (36) by controlling or regulating a manipulated variable of the feed unit (6), using the measuring signal of the force measuring device (7).

## Revendications

1. Dispositif (3, 45) comprenant un arbre (14), une douille de palier (19) entourant au moins une partie de l'arbre (14), pour le logement rotatif de l'arbre (14), un carter (17), dans lequel au moins une partie de la douille de palier (19) est disposée, ainsi qu'un élément d'étanchéité (25) étanchéifiant un interstice (29) entre une paroi (21) du carter (17) et la douille de palier (19), qui comprend un côté avant (27) et un côté arrière (28),
**caractérisé en ce que**
l'élément d'étanchéité (25) divise, de manière étanche aux gaz, l'interstice (29), en une première chambre partielle (30) adjacente au côté avant (27) de l'élément d'étanchéité (25) et une deuxième chambre partielle (31) adjacente au côté arrière (28) de l'élément d'étanchéité (25), l'élément d'étanchéité (25) comprend une partie flexible (26) qui est en contact avec la paroi (21) du carter (17) et/ou avec la douille de palier (19) et le carter (17) comprend une première entrée de gaz d'arrêt (33) pour l'introduction de gaz d'arrêt (37) dans la première chambre partielle (30) ainsi qu'une deuxième entrée de gaz d'arrêt (34) pour l'introduction de gaz d'arrêt (37) dans la deuxième chambre partielle (31).

2. Dispositif (3, 45) selon la revendication 1,
**caractérisé par**
au moins un palier (20) pour le logement rotatif de la douille de palier (19) dans le carter (17), qui est disposé entre la douille de palier (19) et la paroi (21) du carter (17).

3. Dispositif (3, 45) selon la revendication 1 ou 2,
**caractérisé en ce que**
la douille de palier (19) est guidée à travers l'élément d'étanchéité (25).

4. Dispositif (3, 45) selon l'une des revendications précédentes,
**caractérisé en ce que**
la partie flexible (26) de l'élément d'étanchéité (25) est en contact avec la douille de palier (19) le long d'une ligne de circonférence de la douille de palier (19).

5. Dispositif (3, 45) selon l'une des revendications précédentes,
**caractérisé en ce que**
au moins une des deux entrées de gaz d'arrêt (33, 34) comprend un élément de filtrage (35) pour le filtrage du gaz d'arrêt (37).

6. Dispositif (3, 45) selon l'une des revendications précédentes,
**caractérisé en ce que**
l'élément d'étanchéité (25) comprend une pièce de fixation (38) et une pièce d'étanchéité (39) reliée avec la pièce de fixation (38), dans lequel la pièce d'étanchéité (39) constitue la partie flexible (26) de l'élément d'étanchéité (25) et la pièce de fixation (38) est fixée à la paroi (21) du carter (17).

7. Dispositif (3, 45) selon la revendication 6,
**caractérisé en ce que**
la pièce de fixation (38) contient un métal, plus particulièrement un acier inoxydable et la pièce d'étanchéité (39) contient un élastomère, plus particulièrement du silicone.

8. Dispositif (3, 45) selon la revendication 6 ou 7,
**caractérisé en ce que**
la pièce de fixation (38) présente une forme à symétrie axiale et la pièce d'étanchéité (39) comprend une première portion (40) ainsi qu'une deuxième portion (41) reliée avec la première portion (40), dans lequel la première portion (40) présente une forme cylindrique creuse et la deuxième portion (41) présente une forme annulaire et dans lequel les première et deuxième portions (40, 41) de la pièce d'étanchéité (39) sont réalisées plus particulièrement d'une seule pièce.

9. Dispositif (3, 45) selon l'une des revendications 6 à 8,
**caractérisé en ce que**
la pièce de fixation (38) présente un diamètre extérieur plus grand ainsi qu'un diamètre intérieur plus grand que la pièce d'étanchéité (39).

10. Dispositif (3, 45) selon l'une des revendications 6 à 9,
**caractérisé en ce que** la pièce d'étanchéité (39) comprend une portion (43) qui est disposée par complémentarité de forme dans une rainure (44) de la pièce de fixation (38).

11. Dispositif (3, 45) selon l'une des revendications précédentes,
**caractérisé par**
une bague flottante (46) pour l'étanchéification d'une ouverture (18) du carter (17), à travers laquelle l'arbre (14) est guidé, dans lequel l'arbre (14) est guidé à travers la bague flottante (46).

12. Dispositif (3, 45) selon l'une des revendications précédentes,
**caractérisé par**
au moins un palier (22), disposé entre l'arbre (14) et la douille de palier (19), au moyen duquel l'arbre (14) est logé de manière rotative dans la douille de palier (19).

13. Dispositif (3, 45) selon l'une des revendications précédentes,
**caractérisé par**
une roue de mesure à aubes (13), logée de manière rotative, pour la déviation d'un flux de matériau (36), qui est reliée de manière rigide avec l'arbre (14), dans lequel le côté avant (27) de l'élément d'étanchéité (25) est orienté vers la roue de mesure (13).

14. Dispositif (3, 45) selon l'une des revendications précédentes,
**caractérisé par**
au moins un élément d'étanchéité supplémentaire (23), qui étanchéifie un interstice (24) entre la douille de palier (19) et l'arbre (14).

15. Dispositif (3, 45) selon l'une des revendications précédentes,
dans lequel le dispositif (3, 45) est un appareil de mesure pour la mesure d'un débit massique d'un flux de matériau (36), plus particulièrement d'un flux de produit en vrac, selon le principe de Coriolis et le dispositif (3, 45) comprend un dispositif de mesure de force (7) qui est conçu pour générer un signal de mesure dépendant du débit massique du flux de matériau (36).

16. Procédé de fonctionnement d'un dispositif (3, 45) selon l'une des revendications précédentes, dans lequel, par l'intermédiaire des deux entrées de gaz d'arrêt (33, 34), un gaz d'arrêt (37) est introduit dans le carter (17), afin que le côté arrière (28) de l'élément d'étanchéité (25) étanchéifiant l'interstice (29) entre la paroi (21) du carter (17) et la douille de palier (19) soit alimenté avec une pression de gaz égale ou globalement égale au côté avant (27) de l'élément d'étanchéité (25).

17. Système de mesure (2), comprenant un dispositif (3, 45) selon la revendication 15 ainsi qu'une unité d'analyse (10) qui est conçue pour déterminer, à l'aide du signal de mesure du dispositif de mesure de force (7), le débit massique du flux de matériau (36).

18. Système de dosage (1) comprenant un dispositif (3, 45) selon la revendication 15, une unité d'alimentation (6) pour l'introduction du flux de matériau (36) dans le dispositif (3, 45) ainsi qu'une unité d'analyse (10) qui est conçue pour régler, à l'aide du signal de mesure du dispositif de mesure de force (7), par le contrôle ou la régulation d'une grandeur de réglage de l'unité d'alimentation (6), un débit massique défini du flux de matériau (36).
